# EUROPEAN PATENT SPECIFICATION

(11) **EP 3 975 725 B1**
(45) Date of publication and mention of the grant of the patent: **21.02.2024**
(21) Application number: 20727629.6
(22) Date of filing: 21.05.2020
(51) Int. Cl.: A21D 13/14, A21D 13/19, A21D 13/33, A23G 3/54, A23G 1/54

(54) **COMPOSITE BAKERY PRODUCT**
ZUSAMMENGESETZTE BACKWARE
PRODUIT DE BOULANGERIE COMPOSITE

(30) Priority: 24.05.2019 IT 201900007207
(43) Date of publication of application: 06.04.2022
(73) Proprietor: BARILLA G. e R. Fratelli S.p.A., 43100 Parma (IT)
(72) Inventor: FILOMENO, Marta, 43100 Parma (IT); GIAMPICCOLO, Giovanni, 43100 Parma (IT); GIOVANETTI, Marco, 43100 Parma (IT); MASOTTI, Valentina, 43100 Parma (IT); PERIZZOLO, Nicola, 43100 Parma (IT)
(74) Representative: Botti & Ferrari S.p.A.
(86) International application number: PCT/EP2020/064213
(87) International publication number: WO 2020/239608

(56) References cited:
- EP-A2- 0 064 155
- WO-A1-2004/010791
- WO-A1-2006/048644
- WO-A1-2018/041870
- WO-A1-2018/041875
- CH-A- 521 718
- CN-A- 103 271 425
- CN-A- 103 637 390
- CN-B- 103 798 937
- FR-A1- 2 437 996
- GB-A- 1 600 551
- US-A- 943 945
- US-A1- 2004 253 346

## Description

### Field of Application

The present invention refers, in general, to the field of food industry. In particular, the invention relates to a bakery product comprising a core that is partially covered by a sheath, wherein the core consists of an edible, water-insoluble capsule enclosing a liquid food and the sheath is made of a shortbread biscuit; it is further described the process for the production thereof.

### Prior art

In the food industry, especially in the confectionery industry, there is a need to make available new products in order to provide new sensory experiences in terms of flavor and texture to the consumers.

It is known that it is possible to combine two different textures in the same confectionery product, for example a solid and a liquid or semiliquid texture.

For example, chocolate candies containing a liquid filling, for example liqueur, are well known, which are made in such a manner that once the outer chocolate envelope has been bitten, the liquid filling is released into the mouth of the consumer. Confectionery products filled with a semisolid content are also well known, for example chocolate candies filled with caramel.

International patent applications WO 200879927 and WO 2008061188 describe a confection having a hard outer shell (e.g. candy), which encloses a filling selected from a liquid, a paste, a powder, a hard confection or a combination thereof.

International patent application WO 2015101963 describes a confectionery composition comprising an outer edible shell made of chocolate and a filling, wherein said filling comprises a plurality of solid inclusions and at least one liquid.

International patent application WO 2013190265 describes a food product, preferably based on wafer or chocolate, having a plurality of adjacent extruded portions connected to one another along their length by a frangible connecting portion. The extruded portions of this product may be hollow and independently filled with a solid or liquid food, or a mixture thereof, optionally selected from: liquid chocolate, caramel, praline, toffee candy, dark chocolate, sugar and sugarless syrups, peanut butter, cream, soft cheese, fruit paste, cake material, nut paste and truffle.

US 943 945 discloses a liquor containing confection the body of which has extension pieces adapted to be broken off for admitting air through one and exhausting the liquor from the other extension piece. The body or capsule of the confection is preferably made of sugar and is preferably covered by an envelope of an eatable substance, such as biscuit, cake, chocolate or sugar, in such a way that the capsule projects from the envelope at the top and bottom end, which project in the form of lugs or extensions pieces suitably shaped to be easily broken off by hand or by biting. In such a way, air enter at one end and the content of the capsule can be sucked out at the other end. The envelope can then be eaten.

GB 1 600 551 discloses a honey wafer biscuit comprising overlying top and bottom edible wafer biscuit parts, at least one of which has a chamber; bees honey in the chamber and edible adhesive at the joints between the parts.

WO 2004/010791 discloses a confection comprising a capsule containing an alcoholic fluid embedded in a frozen dessert, wherein the capsule is inert with respect of the alcohol and the frozen dessert.

WO 2006/048644 discloses a frozen confectionary or dessert product comprising a body of frozen edible product having one or more cavities containing a liquor or antifreeze based liquid, viscous or semi viscous non frozen edible product, wherein the non frozen product includes a liquor or antifreeze liquid and is encapsulated in an edible membrane or cavity wall which is substantially impervious to the non frozen product.

CN 103637390 A discloses a composite bakery product comprising a chocolate capsule filled with a liquid selected between milk and fruit juice, wherein the capsule is optionally sandwiched by two shells made of biscuits.

US 2004/253346 discloses a liquid filled, wafer covered, edible Communion cup, comprising: an edible cup having an open mouth; a liquid composition contained in said cup; and an edible wafer sealed over the mouth of the cup in order to form a removable cover to contain the liquid; whereby, the wafer and liquid composition can be consumed to fulfill Communion requirements, and the cup can be consumed to avoid waste.

CN 103271425 A discloses a composite product comprising a chocolate capsule enclosing a liquid food; optionally, the capsule may be sandwiched between two biscuit shell parts.

CH 521 718 discloses a process for the preparation of a candy with a sugar crust, characterized in that a sugar syrup mixed with a liquid or pasty product is cooked and poured into the starch so as to form a solid and impermeable outer crust containing the liquid or pasty inside, then a crunchy product is made to adhere to this sugar crust by interposing a layer of chocolate.

CN 103798937 A discloses a food containing food stuffing. Part of food stuffing is arranged in a cavity inside an edible container, the other part of the food stuffing is arranged in a hole between the edible container and the food, the food stuffing can be arranged in a cavity in a sandwich food shell and can be sandwiched in a groove of a shell of the edible container, and the edible container and the shell can be attached to each other.

WO 2018/041875 discloses a micro aerated choco-material having a plastic viscosity before aeration as measured according to ICA method 46 (2000) of from 0.1 to 20 Pa.s, where the composition has dispersed therein bubbles of an inert gas.

WO 2018/041870 discloses a process for producing a micro-aerated choco-material.

Patent application EP 0 064 155 describes a confectionery product comprising a shell formed by two wafer shell valves jointly enclosing a filling. The filling is in turn contained in a water-impermeable capsule of edible material, for example chocolate, bonded to the inner surface of the wafer shell. The filling may be creamy or liquid and may contain a given water amount. In said confectionery products, the envelope made of wafer or chocolate which contains the liquid filling should be impermeable to it; otherwise, once the preparation of said confections has been completed, the liquid filling would immediately impregnate the envelope containing it, thereby causing the deterioration of the final product in a very short time.

As a consequence, during chewing, the consumer is still able to distinguish the various elements of the confectionery product, as they are substantially impermeable and immiscible with each other.

The consumer, however, after perceiving the different textures of the components of the confectionery product, could appreciate the perception of a more homogeneous texture, such as the one of for example a classic biscuit soaked in coffee, in milk or in similar beverages.

This perception cannot be obtained with any of the above mentioned known confectionery products, since none of them envisages the presence of a component based on biscuit, which can be impregnated by the liquid filling during chewing. In particular, the wafer that constitutes the shell of the confectionery product according to EP 0 064 155 is very thin and it is not able to absorb by impregnation the liquid contained in the inner capsule.

The problem underlying the present invention is to provide a bakery product, based on a biscuit but also comprising a liquid filling and produced in such a manner that, immediately after biting the product, the consumer is able to distinguish the different textures which the product is made of , whereas, during chewing, (s)he perceives an homogeneous texture, for example such as the one of a classic soaked biscuit, and a flavor due to the combination of the biscuit and the liquid filling.

### Summary of the Invention

Said problem was solved, according to the invention, by providing a composite bakery product consisting of an edible capsule whose external surface includes at least one flat area, said edible capsule being coated by a sheath (2) over its entire surface except for one flat area thereof, said edible capsule (3) enclosing a liquid food (4) and being impermeable to said liquid food, and said sheath (2) being made of a shortbread biscuit, wherein said edible capsule is made of chocolate, chocolate substitutes, cocoa butter or other edible fat.

The liquid food is generally a beverage, optionally sweetened, selected from the group comprising coffee, chocolate, coffee with milk, cappuccino, coffee substitutes and fruit juice.

Preferably, the liquid has a water activity value between 0.7 and 0.85, conveniently 0.82.

Preferably, a layer of a food ingredient is interposed between the edible capsule and the biscuit sheath, said food ingredient layer being able to firmly bind the edible capsule to the biscuit sheath.

The above-mentioned food ingredient is preferably chocolate.

In this case, the edible capsule is preferably made of chocolate.

Preferably, a layer of chocolate which coats said one flat area of the capsule external surface that is not coated by said sheath is also present.

The capsule of the bakery product according to the invention may have the shape of a spherical cap, of a partial ovoid, of a truncated cone or of a cube, parallelepiped, pyramid, prism or polyhedron.

Said capsule preferably constitutes 10 to 40% by weight of the total weight of the bakery product.

By partially coating the capsule, the sheath has substantially the same shape of the latter, but does not result in a complete solid and may therefore have an overall shape of a spherical cap, of a partial ovoid, of a truncated cone or of a cube, parallelepiped, pyramid, prism or polyhedron lacking one of its faces.

Preferably, both the capsule and the sheath have a truncated cone shape.

The liquid food enclosed in the capsule preferably constitutes 20% to 50% by weight of the total weight of the bakery product.

The sheath of the bakery product according to the invention preferably has a greater dimension (length or diameter) from 15 mm to 40 mm.

Preferably, the composite bakery product according to the present invention has on the whole the shape of a truncated cone with a major base having a diameter of 25-30 mm, a minor base having a diameter of 12-18 mm and a height of 16-24 mm.

According to an embodiment of the present invention, the biscuit sheath of the bakery product has a surface coating of chocolate, chocolate substitute or icing.

The liquid food contained in the core of the bakery product according to the present invention is water-based and wets and soaks the biscuit of the sheath only at the time of consumption. This is possible because of the presence of the edible capsule of the core, which encloses the liquid food, so as to isolate it from the biscuit sheath until the moment of consumption.

At the moment of tasting, the edible capsule is bitten and broken, thereby releasing the liquid food which contacts the biscuit and is quickly absorbed by the latter, which, being permeable to liquids, softens and assumes the aroma of the liquid food.

In this way, only upon biting, the consumer is able to distinguish the different textures which the bakery product of the present invention is made of. Immediately afterwards, during chewing, the liquid food absorbed in the biscuit causes the consumer to perceive a sensation similar to the one experienced by tasting a biscuit dipped in a beverage such as coffee, milk, coffee with milk and the like.

A further advantage of the structure of said bakery product is that the properties of freshness, fragrance and texture of each element of the finished product (biscuit sheath, chocolate capsule and liquid food) remain unaltered until the moment of consumption. Indeed, during conservation of the product, both the biscuit and the liquid food, held separate by the edible capsule, keep their characterizing organoleptic properties (e.g. texture and flavor).

According to an embodiment, the bakery product according to the invention provides a further texture to the consumer, due to the presence of an outer chocolate coating which encases the biscuit sheath.

The biscuit sheath of the present bakery product may be advantageously obtained from two different biscuit doughs which, upon baking, result in sheath portions of different color and flavor, in order to enhance the sensory experience of the consumer.

The present invention thus provides different bakery products which may differ, for example, in the combination of the different flavors of said portions of the biscuit sheath with the flavor of the liquid food and that of the edible capsule.

The portions of the biscuit sheath of different color and flavor can be obtained by incorporating in the dough from which each portion of the biscuit sheath is produced, ingredients such as for example cocoa, chocolate, red fruits, etc., which are able to confer a specific color and flavor to the dough.

A further advantage of the present invention is that the present bakery product has such dimensions to be consumed in one go (i.e. in only one bite), so that the liquid food can soak and completely impregnate the biscuit sheath.

### Drawings

Figure 1 is a schematic representation in cross-section of an embodiment of the bakery product according to the present invention, in which the sheath consists of shortbread biscuit, the capsule has the shape of a truncated cone made of chocolate and the liquid food is a coffee-based beverage.
Figure 2a is a photograph of the bakery product according to an embodiment of the present invention.
Figure 2b is a photograph of the core of the bakery product of Figure 2a.
Figure 2c is a photograph of the sheath of the bakery product of Figure 2a.

### Detailed Description of the Invention

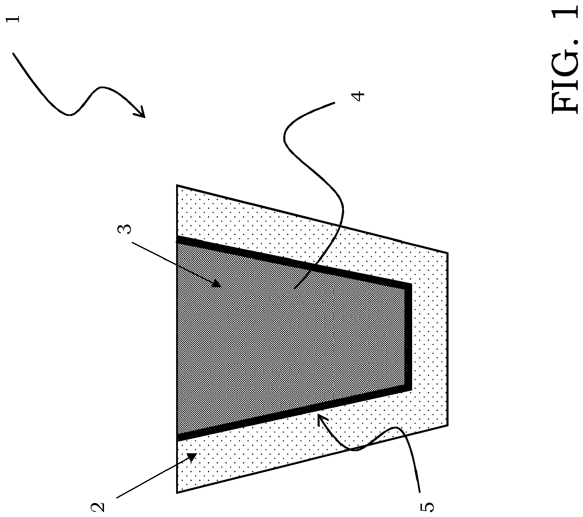

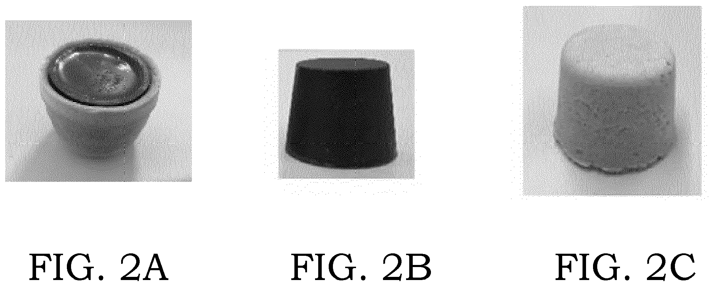

The present invention provides a composite bakery product 1 comprising a biscuit sheath 2 which partially encases a core consisting of an edible capsule 3 and a liquid food 4 contained therein, where said capsule is impermeable to the liquid it contains (Figure 1). The encasing of the core is only partial, because, as shown in Figure 2a, one flat area of the surface of the capsule is uncoated. A layer 5 of a food ingredient, typically chocolate, is interposed between the biscuit sheath 2 and the edible capsule 3, said food ingredient layer firmly binding the edible capsule 3 and the biscuit sheath 2.

In a particular embodiment, the edible capsule 3 is made in a truncated-cone shape and the biscuit sheath encases only its lateral surfaces and its minor base (Figure 2a).

The term "bakery product", as used herein, means a product which, at least in part, is baked in an oven according to one of the following baking technologies: warm air, vapor, microwave and radiofrequency; alternatively, the product can be baked between two heating plates.

### Biscuit

The term "biscuit", as used herein, means a shortbread biscuit obtained from a dough of flour, sugar, butter or other vegetable fat and other ingredients (as described in Example 1), oven-baked.

The sheath of the bakery product according to the present invention is made of a biscuit, as defined above, characterized in that it is crumbly and liquid-permeable.

The sheath of the bakery product according to the present invention may have different portions, which, in some embodiments, may be characterized by being of different flavors and/or colors.

For example, one of the portions of the biscuit sheath may contain cocoa or have the taste of coffee or cappuccino, while the remaining portion(s) may be vanilla-flavored.

In this way, it is possible to make a range of products which have combinations of different shapes, colors and/or tastes.

### Edible capsule

The edible capsule 3 of the present bakery product encloses the liquid food 4, isolating it from the biscuit sheath 2 during the conservation of the product. Thus, the capsule has to be impermeable to the liquid food in order to effectively perform its function.

When it is bitten by the consumer, said capsule breaks, allowing the liquid food to come out and to be quickly absorbed by the biscuit.

The capsule is therefore solid and impermeable to the liquid contained therein, so as to maintain inside itself the liquid food during the conservation of the product, but still being suited to be bitten and broken during chewing by the consumer.

Said capsule may consists of, for example, chocolate, chocolate substitute, cocoa butter or other edible fat or of other food ingredient impermeable to the liquid (for example waxes, alginate), and may be of different shapes, for example spherical cap or truncated-cone shape.

In a preferred embodiment, the capsule consists of a truncated cone made of chocolate, which chocolate may be dark, milk or white chocolate.

### Liquid food

The liquid food contained in the edible capsule may be, for example, a beverage, optionally sweetened, selected from the group consisting of coffee, chocolate, coffee with milk, cappuccino, coffee substitutes and fruit juice.

To guarantee its stability at room temperature, the liquid food is characterized by a water activity between 0.7 and 0.85, preferably 0.82.

The quantity of liquid food in the bakery product of the present invention is between 20% and 40% by weight of the total weight of the bakery product.

### Bakery product

The bakery product according to the present invention may have different geometrical shapes.

In fact, due to the different shapes in which a shortbread biscuit can be made, the bakery product may have, for example, the shape of a spherical segment, segment of ovoid, cube, parallelepiped, pyramid, prism or polyhedron with 4-12 faces.

The dimensions are such that it is possible to consume a single bakery product according to the invention in one go, i.e. in one bite, and, for this purpose, the greater dimension of the sheath of the bakery product ranges preferably from 15 mm to 40 mm. The total weight of the bakery product according to the present invention is preferably between 10 grams and 20 grams.

The present invention will be further described with reference to some exemplifying embodiments which are provided below by way of nonlimiting illustration.

### EXAMPLE 1- Production method in detail

### Preparation of the liquid food

The liquid food filling was prepared with the flavor of coffee according to the following proportions:

| *Ingredient* | *Percentage (%)* |
|---|---|
| Water | 17.9 |
| Sugar | 68.3 |
| Liquid espresso coffee | 13.8 |

The above percentages are to be meant by weight of the total weight of the ingredients. The ingredients were mixed together and heated to about 70°C until reaching a homogeneous compound. The liquid thereby obtained was allowed to cool to room temperature.

### Capsule preparation

The capsule 3 consisted of 70% dark chocolate.

In particular, it was formed by pouring 70% tempered dark chocolate in designated little molds with truncated-cone shape (major base diameter 25 mm, height 16.5 mm and minor base diameter 11 mm). The molds were turned upside down to remove the chocolate in excess and cooled to form a partial chocolate envelope having a thickness of about 1.5 mm.

Once the partial envelope had cooled, the previously prepared coffee-based liquid food was introduced into it by means of a syringe, in an amount equal to about 4 g.

Once the partial envelope had been filled, the envelope was completed by closing it by pouring molten 70% tempered dark chocolate onto its still open surface. The excess of molten chocolate was removed with a spatula, thereby obtaining the filled and sealed truncated-cone-shaped capsule 3, which was extracted from the mold after cooling.

The filled truncated-cone-shaped capsule thereby obtained weighted about 7.5 g.

### Biscuit preparation

A dough for a biscuit, such as shortbread biscuit, was prepared using the following ingredients.

| *Ingredient* | *Percentage* (%) |
|---|---|
| Soft wheat flour | 54 |
| Sugar | 18.4 |
| Sunflower oil | 7.7 |
| Butter | 6.7 |
| Water | 6.7 |
| Wheat starch | 5.8 |
| Salt | 0.3 |
| Sodium bicarbonate | 0.3 |
| Ammonium bicarbonate | 0.1 |

The above percentages of the single ingredients are to be meant by weight of the total weight of the dough.

The above-mentioned ingredients were mixed in a planetary mixer at variable mixing speed, according to the following recipe.

In a first step, a step of slow mixing (22 rpm) of sugar, butter, sunflower oil, was carried out for 1 minute, followed by a step of fast mixing (48 rpm) for a time period of 4 minutes.

In a second step, water, salt, sodium bicarbonate and ammonium bicarbonate were added with a slow mixing (22 rpm) for 2 minutes.

Finally, in the third step, flour was added with a slow mixing (22 rpm) for 2 minutes.

Once the dough was formed, it was divided and shaped in spherical portions, each weighing 4.5 g (weight identified to properly fill the cells of the molds).

The thus-obtained portions of biscuit dough were put inside metal molds having wells with truncated-cone shape (major base diameter 28 mm, height 20 mm and minor base diameter 14 mm).

A metal countermold with solid protrusions with a shape complementary to that of the wells of the mold (major base diameter 25 mm, height 17 mm and minor base diameter 11 mm) was applied to the mold, so as to create a dough layer having a thickness of about 3 mm interposed between each well of the mold and the corresponding solid protrusion of the countermold.

The block formed by the joined mold and countermold is inserted into a circulating-air oven at 200°C for 10 minutes to bake the dough.

Once baked, the biscuits are removed from the mold and allowed to cool to room temperature.

Each of the biscuits removed from the mold had a truncated-cone-shaped cavity which had formed thanks to the presence of the metal countermold in correspondence to the wells of the underlying mold.

### Assembly of the finished product

In order to obtain the finished product, a given amount (0.3 g) of molten 70% tempered dark chocolate is uniformly distributed onto the inner walls of the truncated-cone-shaped cavities of the biscuits and the truncated-cone-shaped chocolate capsule, filled with coffee-flavored liquid food and obtained as described above, is introduced into each cavity, leaving uncovered the major base of the truncated-cone-shaped chocolate capsule. The thereby assembled product is allowed to cool and the chocolate capsule remains firmly anchored to the biscuit thanks to the hardening of the previously distributed molten chocolate.

### EXAMPLE 2 - Confectionery products

Some examples of confectionery products according to the present invention are described below.

All the following confectionery products described in Table 1 have a sheath made of shortbread biscuit which partially encases a chocolate capsule containing a liquid food; possibly, there may be a chocolate coating which externally encases the shortbread biscuit.

**Table 1: Examples of flavor combinations of the bakery product according to the invention.**

| | Sheaths made of shortbread biscuit | Chocolate capsule | Liquid food | Outer chocolate coating |
|---|---|---|---|---|
| Example 1 | No added aroma | Dark chocolate | Coffee | Absent |
| Example 2 | No added aroma | Milk chocolate | Coffee | Absent |
| Example 3 | No added aroma | White | Coffee | Absent |
| | | chocolate | | |
| Example 4 | No added aroma | Milk chocolate | Coffee | Present |
| Example 5 | Cocoa biscuit | Dark chocolate | Coffee | Absent |
| Example 6 | Biscuit sheath in part milk-flavored and in part cappuccinoflavored | White chocolate | Coffee | Absent |
| Example 7 | Biscuit sheath in part milk-flavored and in part without aroma | White chocolate | Coffee | Absent |
| Example 8 | Biscuit sheath in part coffee-flavored and in part without added aroma | Dark chocolate | Coffee | Absent |
| Example 9 | No added aroma | Dark chocolate | Cappuccino | Absent |
| Example 10 | No added aroma | Dark chocolate | Fruit juice | Absent |

| | | | | |
|---|---|---|---|---|
| "Coffee" means a coffee-based beverage, for example an espresso, with or without sugar. | | | | |

## Claims

1. A composite bakery product (1) comprising a core consisting of an edible capsule whose external surface includes at least one flat area, said edible capsule being coated by a sheath (2) over its entire surface except for one flat area thereof, said edible capsule (3) enclosing a liquid food (4) and being impermeable to said liquid food, and said sheath (2) being made of a shortbread biscuit, wherein said edible capsule is made of chocolate, chocolate substitutes, cocoa butter or other edible fat.

2. The composite bakery product (1) according to claim 1, wherein said liquid food is a beverage, optionally sweetened, selected from the group comprising coffee, chocolate, coffee with milk, cappuccino, coffee substitutes and, fruit juice.

3. The composite bakery product (1) according to claim 1 or 2, wherein said liquid food has a water activity value between 0.7 and 0.85, preferably 0.82.

4. The composite bakery product (1) according to any one of claims 1 to 3, wherein said edible capsule (3) is made of chocolate.

5. The composite bakery product (1) according to at least one of claims 1-4, wherein a layer (5) of a food ingredient is interposed between said edible capsule (3) and said biscuit sheath (2), said food ingredient layer being able to firmly bind said edible capsule to said biscuit sheath.

6. The composite bakery product (1) according to claim 5, wherein said food ingredient is chocolate.

7. The composite bakery product (1) according to claim 6, wherein said edible capsule (3) is made of chocolate.

8. The composite bakery product (1) according to claim 7, wherein a layer of chocolate coats said one flat area of the capsule external surface that is not coated by said sheath.

9. The composite bakery product (1) according to at least one of claims 1-8, wherein said capsule (3) has the shape of a spherical cap, of a partial ovoid, of a truncated cone or of a cube, parallelepiped, pyramid, prism or polyhedron.

10. The composite bakery product (1) according to claim 9, wherein said capsule (3)) has a truncated cone shape.

11. The composite bakery product (1) according to at least one of claims 1-10, wherein said capsule (3) constitutes from 10 to 40% by weight of the total weight of the bakery product.

12. The composite bakery product (1) according to at least one of claims 1-11, wherein said sheath (2) has an overall shape of a spherical cap, of a partial ovoid, of a truncated cone or of a cube, parallelepiped, pyramid, prism or polyhedron lacking one of its faces.

13. The composite bakery product (1) according to at least one of claims 1-12, wherein said liquid food (4) enclosed in the capsule (3) constitutes from 20% to 50% by weight of the total weight of the bakery product.

14. The composite bakery product (1) according to at least one of claims 1-13, wherein said sheath (2) has a greater dimension (length or diameter) from 15 mm to 40 mm.

15. The composite bakery product (1) according to at least one of claims 1-14, wherein said capsule (3) and said sheath (2) both have a truncated cone shape.

16. The composite bakery product (1) according to claim 15, having the shape of a truncated cone with a major base having a diameter of 25-30 mm in, a minor base having a diameter of 12-18 mm and a height of 16-24 mm.

17. The composite bakery product (1) according to at least one of claims 1-16, wherein said sheath (2) made of biscuit has an outer surface coating of chocolate, chocolate substitute or icing.

## Patentansprüche

1. Zusammengesetztes Backwarenprodukt (1), das einen Kern umfasst, der aus einer essbaren Kapsel besteht, deren äußere Oberfläche mindestens einen ebenen Bereich aufweist, die essbare Kapsel über ihre gesamte Oberfläche mit Ausnahme eines ebenen Bereichs von einer Hülle (2) umhüllt ist, die essbare Kapsel (3) ein flüssiges Lebensmittel einschließt (4) und für das flüssige Lebensmittel undurchlässig ist, und die Hülle (2) aus einem Mürbeteiggebäck hergestellt ist, wobei die essbare Kapsel aus Schokolade, Schokoladenersatzstoffen, Kakaobutter oder einem anderen essbaren Fett hergestellt ist.

2. Zusammengesetztes Backwarenprodukt (1) gemäß Anspruch 1, wobei das flüssige Lebensmittel ein Getränk ist, wahlweise gesüßt, ausgewählt aus der Gruppe umfassend Kaffee, Trinkschokolade, Milchkaffee, Cappuccino, Kaffeeersatzstoffen und Fruchtsaft.

3. Zusammengesetztes Backwarenprodukt (1) gemäß Anspruch 1 oder 2, wobei das flüssige Lebensmittel einen Wasseraktivitätswert zwischen 0,7 und 0,85 aufweist, vorzugsweise 0,82.

4. Zusammengesetztes Backwarenprodukt (1) gemäß einem der Ansprüche 1 bis 3, wobei die essbare Kapsel (3) aus Schokolade hergestellt ist.

5. Zusammengesetztes Backwarenprodukt (1) gemäß mindestens einem der Ansprüche 1-4, wobei eine Schicht (5) aus einer Lebensmittelzutat zwischen der essbaren Kapsel (3) und der Gebäckhülle (2) angeordnet ist, die Lebensmittelzutatenschicht in der Lage ist, die essbare Kapsel fest an die Gebäckhülle zu binden.

6. Zusammengesetztes Backwarenprodukt (1) gemäß Anspruch 5, wobei die Lebensmittelzutat Schokolade ist.

7. Zusammengesetztes Backwarenprodukt (1) gemäß Anspruch 6, wobei die essbare Kapsel (3) aus Schokolade hergestellt ist.

8. Zusammengesetztes Backwarenprodukt (1) gemäß Anspruch 7, wobei eine Schokoladenschicht den einen ebenen Bereich der äußeren Oberfläche der Kapsel umhüllt, der nicht von der Hülle umhüllt ist.

9. Zusammengesetztes Backwarenprodukt (1) gemäß mindestens einem der Ansprüche 1-8, wobei die Kapsel (3) die Form einer kugelförmigen Kappe, eines teilweisen Eiprofils, eines Kegelstumpfs oder eines Würfels, eines Spats, einer Pyramide, eines Prismas oder eines Polyeders aufweist.

10. Zusammengesetztes Backwarenprodukt (1) gemäß Anspruch 9, wobei die Kapsel (3) eine Kegelstumpfform aufweist.

11. Zusammengesetztes Backwarenprodukt (1) gemäß mindestens einem der Ansprüche 1-10, wobei die Kapsel (3) 10 bis 40 Gew.-% des Gesamtgewichts des Backwarenprodukts ausmacht.

12. Zusammengesetztes Backwarenprodukt (1) gemäß mindestens einem der Ansprüche 1-11, wobei die Hülle (2) die Gesamtform einer kugelförmigen Kappe, eines teilweisen Eiprofils, eines Kegelstumpfs oder eines Würfels, eines Spats, einer Pyramide, eines Prismas oder eines Polyeders aufweist, dem eine seiner Seiten fehlt.

13. Zusammengesetztes Backwarenprodukt (1) gemäß mindestens einem der Ansprüche 1-12, wobei das in der Kapsel (3) eingeschlossene flüssige Lebensmittel (4) 20 bis 50 Gew.-% des Gesamtgewichts des Backwarenprodukts ausmacht.

14. Zusammengesetztes Backwarenprodukt (1) gemäß mindestens einem der Ansprüche 1-13, wobei die Hülle (2) eine größere Abmessung (Länge oder Durchmesser) von 15 mm bis 40 mm aufweist.

15. Zusammengesetztes Backwarenprodukt (1) gemäß mindestens einem der Ansprüche 1-14, wobei die Kapsel (3) und die Hülle (2) beide eine Kegelstumpfform aufweisen.

16. Zusammengesetztes Backwarenprodukt (1) gemäß Anspruch 15, das die Form eines Kegelstumpfes mit einer Hauptbasis aufweist, die einen Durchmesser von 25-30 mm Durchmesser aufweist, einer kleineren Basis, die einen Durchmesser von 12-18 mm und eine Höhe von 16-24 mm aufweist.

17. Zusammengesetztes Backwarenprodukt (1) gemäß mindestens einem der Ansprüche 1-16, wobei die aus Gebäck hergestellte Hülle (2) eine äußere Oberflächenumhüllung aus Schokolade, Schokoladenersatzstoffen oder Zuckerguss aufweist.

## Revendications

1. Produit de boulangerie composite (1) comprenant un noyau consistant en une capsule comestible dont la surface externe inclut au moins une zone plane, ladite capsule comestible étant revêtue par une enveloppe (2) sur sa surface entière à l'exception d'une zone plane de celle-ci, ladite capsule comestible (3) enfermant un aliment liquide (4) et étant imperméable audit aliment liquide, et ladite enveloppe (2) étant constituée d'un biscuit sablé, dans lequel ladite capsule comestible est constituée de chocolat, substituts du chocolat, beurre de cacao ou autre graisse comestible.

2. Produit de boulangerie composite (1) selon la revendication 1, dans lequel ledit aliment liquide est une boisson, éventuellement édulcorée, choisie dans le groupe comprenant le café, chocolat, café au lait, cappuccino, substituts du café et, jus de fruit.

3. Produit de boulangerie composite (1) selon la revendication 1 ou 2, dans lequel ledit aliment liquide présente une valeur d'activité d'eau de 0,7 à 0,85, de préférence de 0,82.

4. Produit de boulangerie composite (1) selon l'une quelconque des revendications 1 à 3, dans lequel ladite capsule comestible (3) est constituée de chocolat.

5. Produit de boulangerie composite (1) selon l'une quelconque des revendications 1-4, dans lequel une couche (5) d'un ingrédient alimentaire est intercalée entre ladite capsule comestible (3) et ladite enveloppe de biscuit (2), ladite couche d'ingrédient alimentaire pouvant lier fermement ladite capsule comestible à ladite enveloppe de biscuit.

6. Produit de boulangerie composite (1) selon la revendication 5, dans lequel ledit ingrédient alimentaire est le chocolat.

7. Produit de boulangerie composite (1) selon la revendication 6, dans lequel ladite capsule comestible (3) est constituée de chocolat.

8. Produit de boulangerie composite (1) selon la revendication 7, dans lequel une couche de chocolat recouvre ladite une zone plane de la surface externe de capsule qui n'est pas revêtue par ladite enveloppe.

9. Produit de boulangerie composite (1) selon au moins une des revendications 1-8, dans lequel ladite capsule (3) présente la forme d'une calotte sphérique, d'un ovoïde partiel, d'un cône tronqué ou d'un cube, de parallélépipède, pyramide, prisme ou polyèdre.

10. Produit de boulangerie composite (1) selon la revendication 9, dans lequel ladite capsule (3) présente une forme de cône tronqué.

11. Produit de boulangerie composite (1) selon au moins une des revendications 1-10, dans lequel ladite capsule (3) constitue de 10 à 40 % en masse de la masse totale du produit de boulangerie.

12. Produit de boulangerie composite (1) selon au moins une des revendications 1-11, dans lequel ladite enveloppe (2) présente une forme globale d'une calotte sphérique, d'un ovoïde partiel, d'un cône tronqué ou d'un cube, de parallélépipède, pyramide, prisme ou polyèdre manquant à une de ses faces.

13. Produit de boulangerie composite (1) selon au moins une des revendications 1-12, dans lequel ledit aliment liquide (4) enfermé dans la capsule (3) constitue de 20 % à 50 % en masse de la masse totale du produit de boulangerie.

14. Produit de boulangerie composite (1) selon au moins une des revendications 1-13, dans lequel ladite enveloppe (2) présente la dimension la plus élevée (longueur ou diamètre) de 15 mm à 40 mm.

15. Produit de boulangerie composite (1) selon au moins une des revendications 1-14, dans lequel ladite capsule (3) et ladite enveloppe (2) présentent toutes deux une forme de cône tronqué.

16. Produit de boulangerie composite (1) selon la revendication 15, présentant la forme d'un cône tronqué avec une base majeure ayant un diamètre de 25-30 mm, une base mineure ayant un diamètre de 12-18 mm et une hauteur de 16-24 mm.

17. Produit de boulangerie composite (1) selon au moins une des revendications 1-16, dans lequel ladite enveloppe (2) constituée de biscuit présente un revêtement de surface externe de chocolat, substitut du chocolat ou glaçage.
